(19) Europäisches Patentamt
European Patent Office
Office européen des brevets

(11) **EP 2 109 310 B1**

(12) **EUROPEAN PATENT SPECIFICATION**

(45) Date of publication and mention
of the grant of the patent:
**04.10.2017 Bulletin 2017/40**

(51) Int Cl.:
*H04N 5/44* (2011.01)    *H04N 5/14* (2006.01)
*H04N 7/01* (2006.01)

(21) Application number: **08251399.5**

(22) Date of filing: **11.04.2008**

(54) **A method fo quantifying inter-field motion in a video frame**

Verfahren zur Quantifizierung der Interfeld-Bewegung in einem Video-Rahmen

Procédé de quantification d'un mouvement inter-champs dans une image vidéo

(84) Designated Contracting States:
**DE FR GB IT**

(43) Date of publication of application:
**14.10.2009 Bulletin 2009/42**

(73) Proprietor: **Tektronix International Sales GmbH**
**8212 Neuhausen am Rheinfall**
**Schaffhausen (CH)**

(72) Inventors:
• **Barton, Oliver James**
**Newport, NP20 3PX (GB)**

• **Elangovan, Premkumar,**
**c/o Tektronix UK Ltd**
**Bristol, BS1 6PL (GB)**

(74) Representative: **HGF Limited**
**Fountain Precinct**
**Balm Green**
**Sheffield S1 2JA (GB)**

(56) References cited:
**EP-A- 1 536 643      GB-A- 2 431 802**
**US-A1- 2006 139 491   US-A1- 2006 164 559**
**US-A1- 2006 238 650   US-A1- 2006 274 196**
**US-B1- 6 288 745      US-B1- 6 348 949**

## Description

The present invention relates to a method of quantifying inter-field motion in a video frame.

Video frames can be classified as either progressive or interlaced, depending upon the method used to display them. In a progressive frame, the horizontal lines of pixels that make up the frame are displayed line by line from top to bottom. In contrast, an interlaced frame is created by displaying two fields in turn, one field (known as the top field) containing the top line of the frame and every second subsequent line, and the other field (the bottom field) containing the second line from the top and every second subsequent line, thus including the bottom line of the frame. Interlaced frames rely on the fact that it takes time for the first field of displayed pixels to decay from the display apparatus, during which time the second field is displayed, to create the illusion of a single frame containing all of the lines of pixels.

The fields of an interlaced video frame are captured sequentially, which means that there is a small time delay between the first field to be captured and the second field to be captured. It is possible for the information contained in the source video frame to change in this time interval, and for this reason it is important that the fields of the video frame are displayed in the correct order, as will be explained below.

Interlaced video frames can be described as either "top field first" or "bottom field first", depending upon which of the fields making up the frame is intended to be displayed first. As there is a small time delay between displaying the first field and displaying the second field, the field intended to be displayed second may contain different information from that contained in the field intended to be displayed first, for example if movement has occurred in the frame in the delay between displaying the first and second fields. Such differences between the field intended to be displayed first and the field intended to be displayed second are known as "inter-field motion". If fields containing inter-field motion are displayed in an incorrect order, distortion may appear in the displayed frame. In an interlaced display, for example, the video typically becomes juddery or shaky as information appears earlier than it was intended to appear. In a progressive display, the reversal of the fields will not cause such juddery or shaky video, as the fields are put together and displayed at a rate of N frames per second, rather than 2N fields per second, but regardless of the field order, the inter-field motion will lead to combing artefacts, i.e. areas of the frames where rows of lines appear, giving a "combed" appearance.

Many video applications, such as inverse telecine, interlaced to progressive conversion and field dominance detection, require a classification of a video frame as either interlaced or progressive. The amount of inter-field motion in a video frame may be used to indicate whether a video frame is progressive or interlaced. Different methods exist for performing this interlaced/progressive classification, but none of them offers a unique metric which is consistent for different image resolutions, types and quality.

EP1536643 discloses an image conversion device and method in which a plurality of interlaced video signals respectively corresponding to a plurality of continuous fields are generated by first, second and third one-field delay circuits on the basis of an input interlaced video signal. A first progressive video generation circuit on the basis of the plurality of interlaced video signals. A second progressive video field signal is generated by a second progressive video generation circuit on the basis of the plurality of interlaced video signals motion amount information in the vertical direction of a picture is calculated by a comparison circuit on the basis of the first progressive video field signal and the second progressive video field signal US2006/0139491 discloses a method for determining a scanning format zig-zag or zipper effects. According to a first aspect of the present invention, there is provided a method of quantifying inter-field motion in a video frame for determining if the video frame is progressive or interlaced, the method comprising generating from the video frame a top field and a bottom field, interpolating the top field and bottom field so generated to produce interpolated top and bottom field images and comparing the interpolated top and bottom field images to each other to determine a value representative of the amount of inter-field motion present between the top field and the bottom field, wherein the interpolated top field image is produced by averaging adjacent lines of the top field with a line of the bottom field which is intermediate the adjacent lines of the top field, and the interpolated bottom field image is produced by averaging adjacent lines of the bottom field with a line of the top field which is intermediate the adjacent lines of the bottom field.

A difference domain frame may be generated by subtracting one of the interpolated top field image and the interpolated bottom field image from the other of the interpolated top field image and the interpolated bottom field image.

Values of pixels of the difference domain frame may be scaled by a scaling factor.

The scaling factor may be determined according to a display size.

Additionally or alternatively, the scaling factor may be determined according to a distance of an observer of a display from the display.

A metric may be calculated for a block of pixels of the difference domain frame, the metric being indicative of the amount of inter-field motion present in the block.

The metric may be calculated by determining the number of pixels of the block having immediate horizontal and vertical neighbours with a non-zero value.

The block may be classified as being progressive or interlaced by comparing the metric to a threshold.

The size of the block may be calculated based on the resolution of the video frame.

The threshold may be calculated based on the size of the block.

Alternatively, a metric may be calculated for the difference domain frame, the metric being indicative of the amount of inter-field motion present in the difference domain frame.

The metric may be based on a gradient value of the values of the pixels in the difference domain frame.

The gradient value may be normalised with the Mean Absolute Deviation of the value of the pixels in the difference domain frame.

Embodiments of the invention will now be described, strictly by way of example only, with reference to the accompanying drawings, of which

Figure 1 is a schematic illustration showing top and bottom fields being generated from a video frame;

Figure 2 is a schematic illustration showing interpolated top and bottom field images;

Figure 3 is a schematic illustration showing subtraction of blocks of pixels of interpolated top and bottom field images; and

Figure 4 is a schematic illustration showing an exemplary 3 x 3 pixel block of a difference domain frame.

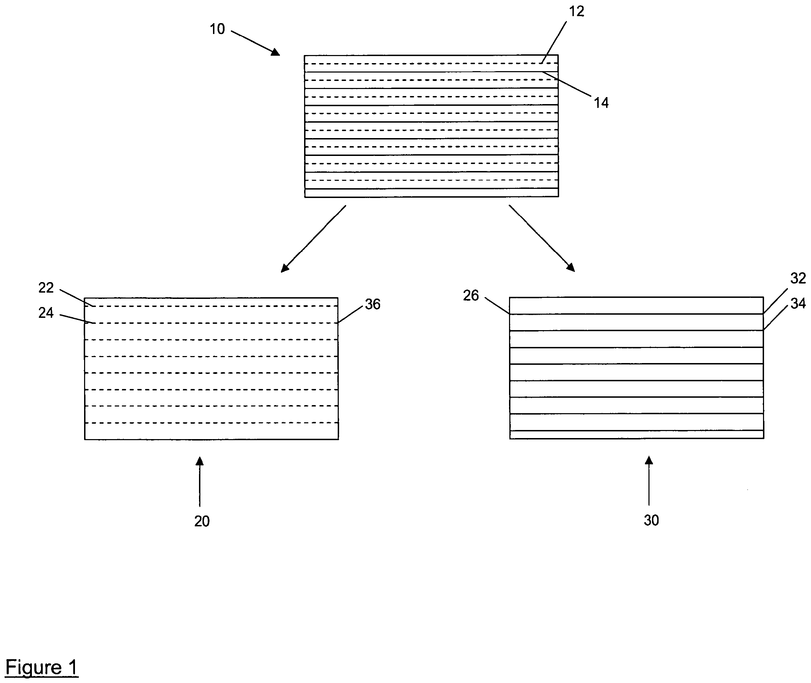

Referring first to Figure 1, a video frame is shown generally at 10 and comprises horizontal lines 12, 14 of pixels which make up an image. Typically, a frame comprises 625 lines for a European video system (known as the Phase Alternate Line, or PAL, standard) or 525 lines for a US system (known as the "National Television System Committee, or NTSC, standard).

In order to quantify the amount of inter-field interference occurring in the video frame 10, the video frame 10 must be divided into top and bottom fields. The top field, shown generally at 20 in Figure 1, is generated by extracting the top line 12 of pixels from the frame 10, and every second subsequent line of pixels, and storing these lines in the position from which they were extracted from the frame 10 in the top field 20. Similarly, the bottom field, shown generally at 30 in Figure 1, is generated by extracting the second line 14 of pixels, and every subsequent second line of pixels, and storing them in the position from which they were extracted from the frame 10 in the bottom field 30.

The top and bottom fields 20, 30 each contain only half of the information contained in the video frame 10 from which they were generated. Thus, the top and bottom fields must be interpolated to produce top and bottom field images each containing as much information as the video frame 10, i.e. to amplify the data contained in the top and bottom fields.

Any interpolation method may be used, although it is advantageous to use a method that the inventors term "three-way interpolation", as this method takes account of the time delay which occurs between the first field to be displayed and the second field to be displayed and of properties of the human visual system (HVS). The "three way interpolation" process is a method based on the principle that the influence of a pixel on the human vision at any point in time is dependent upon what an observer saw in the previous frame (backward temporal masking), what he is about to see in the next frame (forward temporal masking) and the contrast value of the pixel with respect to its neighbours (spatial masking). The "three way interpolation" process also smooths the effect of edges and contours which occur naturally in the frame 10, which may be similar in appearance and characteristics to combing artefacts.

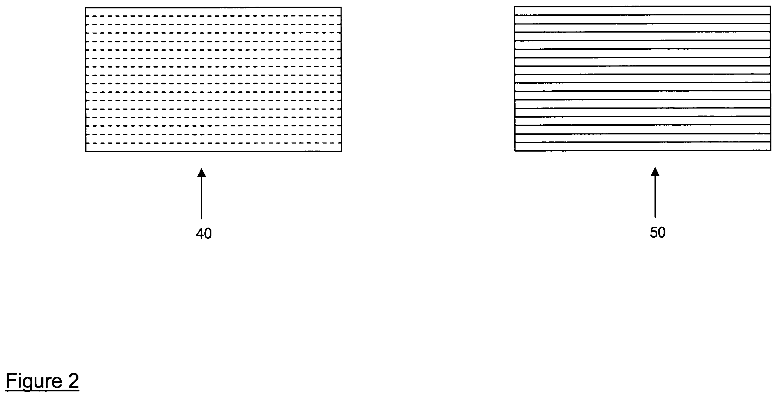

In the "three-way interpolation" method, adjacent lines of pixels in the field to be interpolated are averaged with a line of the other field which is intermediate the lines of the field to be interpolated. Thus, for example, to generate the second line of an interpolated top field image, as shown at 40 in Figure 2, the value of each pixel of the top line 22 of the top field 20 is summed with the value of the corresponding pixel of the second line 24 of the top field 20 and the value of the corresponding pixel of the first line 32 of the bottom field 30. The resulting sum of pixel values is divided by three to obtain an average pixel value, and the "missing" second line of the top field 20 is built up from the average pixel values calculated in this way.

Similarly, to generate the second line of an interpolated bottom field image, as shown at 50 in Figure 2, the value of each pixel of the first line 32 of the bottom field 30 is summed with the value of the corresponding pixel of the second line 34 of the bottom field 30 and the value of the corresponding pixel of the second line 24 of the top field 20. The resulting sum of pixel values is divided by three to obtain an average pixel value, and the "missing" second line of the bottom field 30 is built up from the average pixel values calculated in this way.

This process is repeated to generate, from the top and bottom fields 20, 30, interpolated top and bottom field images 40, 50, each of which contains as much information as the frame 10 from which the top and bottom fields 20, 30 were generated. A major advantage of the "three way interpolation" process is that it can be used in place of a more time-consuming process of applying image processing algorithms for estimating spatial and temporal masking to the top and bottom fields 20, 30.

The interpolated top and bottom field images 40, 50 are effectively progressive frames which represent the information which can be seen at the time at which each of the top and bottom fields 20, 30 are displayed in an interlaced system.

Once the interpolated top and bottom field images 40, 50 have been generated, they must be compared to each other to determine whether there is any inter-field motion between them, and if so, to quantify the inter-field motion.

If the video frame 10 from which the interpolated top and bottom field images 40, 50 were derived is a true progressive frame, there would be only a very small difference between the interpolated top and bottom field images 40, 50, resulting from noise, compression, interpolation approximation and vertical differences. The top and bottom fields derived from the video frame 10 are not exactly the same even if there is no motion between them, as they each represent different portions of the frame 10.

Comparison of the interpolated top and bottom field images 40, 50 is performed by subtracting luminance values of the pixels of one of the images 40, 50 from luminance values of corresponding pixels of the other of the images 40, 50, to generate a "difference domain" frame. In a block-based quantifier, this subtraction operation is carried out in relation to corresponding blocks of pixels of each of the images 40, 50 in turn, whereas in a frame-based quantifier, the subtraction is performed on all of the pixels of each image 40, 50 at once.

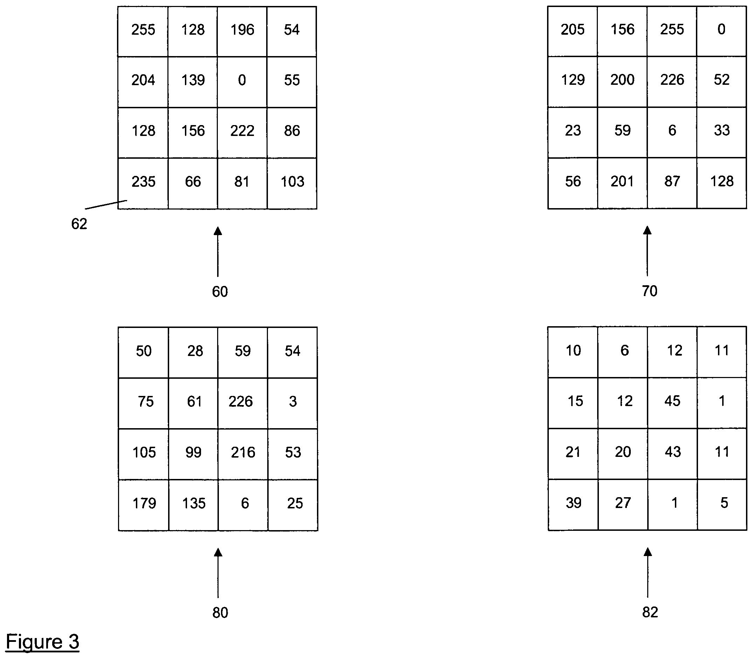

Figure 3 illustrates a "block-wise" subtraction operation. The block 60 is a block of dimensions 4 pixels by 4 pixels taken from the interpolated top field image 40. Each of the pixels in the block 60 has a luminance value. For example, the pixel 62 has a luminance value of 235.

The block 70 is a block of dimensions 4 pixels by 4 pixels taken from the interpolated bottom field image 50, which has been taken from a position in the interpolated bottom field image 50 which corresponds to the position in the interpolated top field image from which the block 60 was taken. Again, each of the pixels in the block 70 has a luminance value.

The block 80 is a "difference block" which represents the absolute value of the result of the subtraction of block 70 from block 60. Thus in block 80, the value of each pixel represents the difference between the luminance value of the corresponding pixel of frame 60 and the luminance value of the corresponding pixel of frame 70.

The subtraction can be made fine or coarse using a scaling factor. The scaling factor may be determined based on the target application. The influence of inter-field motion on the human eyes is a function of the display size and the observer's distance from the display. The influence of inter field motion perceived by the observer at a distance of 50 metres is different from what he perceives from a distance of 100 metres. Similarly, the influence of the inter field motion perceived by the observer when viewed in a computer screen is different from what he will perceive when viewing the same image in a high definition flat screen display. Thus, the scaling factor may be determined according to the display size and/or the distance of the observer from the display. Simple methods like Weber's law or complicated calculations like JND (Just Noticeable Distortion) could be used for efficient estimation of the scaling factor. This process does not influence the quantifying process, it merely affects the quantifier scale and the level of inter-field motion it corresponds to. The block 82 is the difference block 80 scaled by a factor of five, with non-integer results being rounded to the nearest integer. A plurality of difference blocks 80, 82 may be combined to generate the difference domain frame.

Having obtained the difference domain frame, the amount of inter-field motion in the frame 10 from which the difference domain frame is derived can be quantified, and the frame 10 can thus be classified as either progressive or interlaced.

In one embodiment of the invention, quantifying the inter-field motion in the frame 10 is performed using a cluster filter, as will be described below.

Inter-field motion in a video frame, like many other visual artefacts, follows the clustering principle, that is to say that if inter-field motion artefacts are closely distributed within a frame (i.e. they are clustered), their impact, in terms of how noticeable they are to a person viewing the frame, is greater than if they are widely distributed.

The difference domain frame is divided into a plurality of blocks 80, 82 for processing. For each block, the number of pixels having a neighbour of non-zero difference value is estimated or counted. In this way, the distribution of the pixel values in the difference domain frame (widely spaced or clustered) can be established. As non-zero pixel difference values only occur in the difference domain frame where there is a difference between the interpolated top field image 40 and the interpolated bottom field image 50, i.e. where there is inter-field motion, a large number of pixels having neighbours with non-zero difference values is indicative of a large amount of inter-field motion.

For each block 80, 82 of the difference domain frame, a cluster metric is calculated which is indicative of the nature of the distribution of inter-field motion in the frame 10. The cluster metric is calculated by incrementing a counter for each pixel in the block 80, 82 whose immediate horizontal and vertical neighbours are non-zero. Each pixel has a horizontal coordinate $i$ and a vertical coordinate $j$. Thus, for each pixel in the block 80, 82, if the value of the pixels at $(i - 1, j)$, $(i + 1, j)$, $(i, j - 1)$ and $(i, j + 1)$ are all greater than zero, the counter is incremented. The cluster metric of the block 80, 82 is the final value of the counter when all of the pixels in the block 80, 82 have been examined.

The cluster metric of a block 80, 82 can be used to classify the block 80, 82 as progressive or interlaced, by comparing it to a threshold. If the cluster metric of the block 80, 82 is lower than the threshold, it can be considered to be progressive, whereas if the cluster metric of the block 80, 82 is higher than the threshold is can be considered to be interlaced. A small transitional range may be present around the threshold value where the block 80, 82 could be considered to be either progressive or interlaced.

The size of the blocks 80, 82 of the difference domain frame for which cluster metrics are calculated must be carefully selected to ensure that the intensity of inter-field motion is not underestimated due to a large number of stationary pixels (i.e. pixels with a value of zero) in the block 80, 82. The block size will be dependent upon the resolution of the frame, and it has been found that the equation

$$Block\ Size = 0.66\ x\ (Frame\ Resolution)^{0.67}$$

provides good results, although it will be appreciated that other methods could be used to calculate the block size.

The threshold for assessing whether a block 80 is progressive or interlaced can be determined according to the block size, for example using the equation

$$Threshold = 1.05\ x\ (Block\ Size)^{0.6},$$

although again it will be appreciated that other methods for calculating the threshold may be used.

The frame 10 may be classified as progressive or interlaced on the basis of the number of blocks 80, 82 which are classified, according to the cluster filter, as being interlaced or progressive. For example, if over thirty per cent of the blocks 80, 82 are classified as being interlaced, the frame 80 may be classified as interlaced. The results can be effectively interpreted and visualized. For example, a frame containing one block having a very high value and a frame having multiple blocks with a medium value will have the same effect on the viewer.

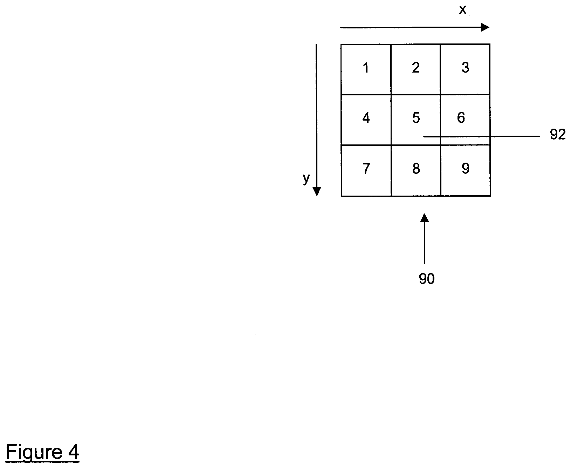

In an alternative embodiment, a gradient value of the pixels of the difference domain frame is used to quantify the inter-field motion in the frame 10, as will be described below with reference to Figure 4.

The gradient value of a pixel is the directional derivative in x and y directions, and is indicative of the deviation of the value of the pixel from the value of neighbouring pixels. As inter-field motion is characterised by differences between neighbouring pixels, a high gradient value may be indicative of inter-field motion.

Figure 4 shows an exemplary 3 x 3 pixel block 90 of the difference domain frame. Each of the pixels has a horizontal (x) coordinate and a vertical (y) coordinate. Each pixel has an x gradient value, indicative of its deviation from the value of horizontally adjacent pixels, and a y gradient value, indicative of it deviation from the value of vertically adjacent pixels. The x gradient can be calculated using the formula

$$G_x = \frac{(P_{(i+1)} - P_i) + (P_i - P_{(i-1)})}{2},$$

where $P_i$ is the value of a pixel at horizontal position i.

Similarly, the y gradient can be calculated using the formula

$$G_y = \frac{(P_{(j+1)} - P_j) + (P_j - P_{(j-1)})}{2},$$

where $P_j$ is the value of a pixel at vertical position j.

Thus, for the central pixel 92 of the block 90 shown in Figure 4,

$$G_x = \frac{(6-5) + (5-4)}{2} = 1,$$

whilst

$$G_y = \frac{(2-5) + (5-8)}{2} = -3$$

The overall gradient value of the pixel can be determined using the equation

$$G = \frac{(|G_x| + |G_y|)}{2}$$

Thus, for the central pixel 92 of the block 90 of Figure 4

$$G = \frac{(|1| + |-3|)}{2} = 2$$

The gradient value for the entire difference domain frame can be calculated by summing the overall gradient values of the individual pixels and dividing the result by the total number of pixels in the frame, i.e.

$$Grad = \frac{\sum_{i=0}^{m} \sum_{j=0}^{n} G_{i,j}}{mn}$$

Similarly the Mean Absolute Deviation (MAD) of pixel luminance values from the mean of the pixel luminance values can be used to give an indication of the amount of inter-field motion in a frame.

To determine the MAD of the difference domain frame, the following equation may be used

$$MAD = \frac{\sum_{i=0}^{m} \sum_{j=0}^{n} |P_{i,j} - M|}{mn},$$

where $P_{i,j}$ is the value of a pixel at position i, j, M is the mean value of the pixels in the frame, m is the number of pixels per horizontal row of the frame and n is the number of pixels per vertical column of the frame.

The gradient value of the entire difference domain frame can be normalised by dividing by the MAD of the difference domain frame, to calculate a Gradient Deviation Ratio, as follows:

$$GDR = \frac{Grad}{MAD}.$$

This normalisation process produces a value for inter-field motion which falls within a uniform range regardless of the characteristics or resolution of the video frame 10. The gradient deviation ratio typically produces a value between 0 and 1 which can be used to quantify inter-field motion in a video frame, and thus to characterise the video frame as progressive or interlaced. A threshold, or a series of thresholds, may be provided for the purpose of progressive/interlaced classification. For example, if the GDR is less than 0.5, the frame may be classified as interlaced. If the GDR is greater than 0.7, the frame may be classified as progressive. If the GDR is between 0.5 and 0.7, the frame cannot accurately be classified as either progressive or interlaced.

The gradient of the difference domain frame may also be calculated using edge detection masks such as Sobel, Prewitt, Canny or Frei-Chen, and the mask used may have an effect on the range of the value or metric produced by the gradient deviation ratio.

Although this method provides satisfactory results, it does not take into account the clustering effect of the human visual system, and thus the results are not as accurate as those produced by the cluster filter embodiment discussed above. The scope of the invention is defined by the appended claims.

**Claims**

1. A method of quantifying inter-field motion in a video frame (10) for determining if the video frame (10) is progressive or interlaced, the method comprising generating from the video frame (10) a top field (20) and a bottom field (30), interpolating each of the top field (20) and the bottom field (30) so generated to produce interpolated top and bottom field images (40, 50) and comparing the interpolated top and bottom field images (40, 50) to each other to determine a value representative of the amount of inter-field motion present between the top field (20) and the bottom field (30), wherein the interpolated top field image (40) is produced by averaging adjacent lines (22, 24) of the top field (20) with a line (32) of the bottom field (30) which is intermediate the adjacent lines (22, 24) of the top field (20), and the interpolated bottom field image (50) is produced by averaging adjacent lines (22, 24) of the bottom field(80) with a line (24) of the top field (20) which is intermediate the adjacent lines (32, 34) of the bottom field (30).

2. A method according to claim 1 wherein a difference domain frame is generated by subtracting one of the interpolated top field image and the interpolated bottom field image from the other of the interpolated top field image and the interpolated bottom field image.

3. A method according to claim 2 wherein values of pixels of the difference domain frame are scaled by a scaling factor.

4. A method according to claim 3 wherein the scaling factor is determined according to a display size.

5. A method according to claim 3 or claim 4 wherein the scaling factor is determined according to a distance of an observer of a display from the display.

6. A method according to any one of claims 2 to 5 wherein a metric is calculated for a block of pixels of the difference domain frame, the metric being indicative of the amount of inter-field motion present in the block.

7. A method according to claim 6 wherein the metric is calculated by determining the number of pixels of the block having immediate horizontal and vertical neighbours with a non-zero value.

8. A method according to claim 7 wherein the block is classified as being progressive or interlaced by comparing the metric to a threshold.

9. A method according to any one of claims 6 to 8 wherein the size of the block is calculated based on the resolution of the video frame.

10. A method according to claim 9 wherein the threshold is calculated based on the size of the block.

11. A method according to claim 2 wherein a metric is calculated for the difference domain frame, the metric being indicative of the amount of inter-field motion present in the difference domain frame.

12. A method according to claim 11 wherein the metric is based on a gradient value of the values of the pixels in the difference domain frame.

13. A method according to claim 12 wherein the gradient value is normalised with the Mean Absolute Deviation of the value of the pixels in the difference domain frame.

**Patentansprüche**

1. Verfahren zum Quantifizieren einer Interbildbewegung in einem Videobild (video frame) (10), um zu bestimmen, ob das Videobild (10) progressiv oder verschachtelt ist, das Verfahren umfassend ein Erzeugen aus dem Videobild (10) eines oberen Felds (20) und eines unteren Felds (30), Interpolieren von jedem des oberen Felds (20) und des unteren Felds (30), die so generiert sind, um interpolierte obere und untere Feldbilder (40, 50) zu erzeugen, und Vergleichen der interpolierten oberen und unteren Feldbilder (40, 50) miteinander, um einen Wert zu bestimmen, der der Menge an Interbildbewegung entspricht, die zwischen dem oberen Feld (20) und dem unteren Feld (30) vorhanden ist, wobei das interpolierte obere Feldbild (40) durch Mittelwertbildung anliegender Zeilen (22, 24) des oberen Felds (20) mit einer Zeile (32) des unteren Felds (30), die zwischen den anliegenden Zeilen (22, 24) des oberen Felds (20) ist, erzeugt wird, und wobei das interpolierte untere Feldbild (50) durch Mittelwertbildung anliegender Zeilen (22, 24) des unteren Felds (80) mit einer Zeile (24) des oberen Felds (20), die zwischen den anliegenden Zeilen (32, 34) des unteren Felds (30) ist, erzeugt wird.

2. Verfahren nach Anspruch 1, wobei ein Differenzdomänenbild durch Subtrahieren eines des interpolierten oberen Feldbilds und des interpolierten unteren Feldbilds von dem anderen des interpolierten oberen Feldbilds und des interpolierten unteren Feldbilds erzeugt wird.

3. Verfahren nach Anspruch 2, wobei Pixelwerte des Differenzdomänenbilds durch einen Skalierungsfaktor skaliert werden.

4. Verfahren nach Anspruch 3, wobei der Skalierungsfaktor gemäß einer Bildschirmgröße bestimmt wird.

5. Verfahren nach Anspruch 3 oder Anspruch 4, wobei der Skalierungsfaktor gemäß einem Abstand eines Betrachters des Bildschirms von dem Bildschirm bestimmt wird.

6. Verfahren nach einem der Ansprüche 2 bis 5, wobei eine Metrik für einen Block von Pixeln des Differenzdomänenbilds berechnet wird, wobei die Menge an Interbildbewegung angibt, die im Block vorhanden ist.

7. Verfahren nach Anspruch 6, wobei die Metrik durch Bestimmen der Anzahl von Pixeln des Blocks berechnet wird, der unmittelbare horizontale und vertikale Nachbarn mit einem Wert von nicht-null hat.

8. Verfahren nach Anspruch 7, wobei der Block durch Vergleichen der Metrik mit einem Schwellenwert als progressiv oder verschachtelt klassifiziert wird.

9. Verfahren nach einem der Ansprüche 6 bis 8, wobei die Größe des Blocks beruhend auf der Auflösung des Videobilds berechnet wird.

10. Verfahren nach Anspruch 9, wobei der Schwellenwert beruhend auf der Größe des Blocks berechnet wird.

11. Verfahren nach Anspruch 2, wobei eine Metrik für das Differenzdomänenbild berechnet wird, wobei die Metrik die Menge an Interbildbewegung angibt, die im Differenzdomänenbild vorhanden ist.

12. Verfahren nach Anspruch 11, wobei die Metrik auf einem Gradientwert der Werte der Pixel in dem Differenzdomänenbild beruht.

13. Verfahren nach Anspruch 12, wobei der Gradientwert mit der mittleren absoluten Abweichung des Werts der Pixel in dem Differenzdomänenbild normalisiert wird.

**Revendications**

1. Méthode de quantification de mouvements inter-champs dans une trame vidéo (10) pour déterminer si la trame vidéo (10) est progressive ou entrelacée, la méthode comprenant la génération, depuis la trame vidéo (10), d'un champ supérieur (20) et d'un champ inférieur (30), l'interpolation de chacun du champ supérieur (20) et du champ inférieur (30) générés de façon à produire des images interpolées des champs supérieur et inférieur (40, 50) et la comparaison entre elles des images interpolées des champs supérieur et inférieur (40, 50) afin d'établir une valeur représentative de la quantité de mouvement inter-champs présente entre le champ supérieur (20) et le champ inférieur (30), l'image interpolée de champ supérieur (40) étant produite par moyennage de lignes adjacentes (22, 24) du champ supérieur (20) avec une ligne (32) du champ inférieur (30), qui est l'intermédiaire des lignes adjacentes (22, 24) du champ supérieur (20), et l'image interpolée de champ inférieur (50) étant produite par moyennage de lignes adjacentes (22, 24) du champ inférieur (80) avec une ligne (24) du champ supérieur (20), qui est l'intermédiaire des lignes adjacentes (32, 34) du champ inférieur (30).

2. Méthode selon la revendication 1, une trame de domaine différentielle étant générée en soustrayant une des images parmi l'image interpolée de champ supérieur et l'image interpolée de champ inférieur de l'autre parmi l'image interpolée de champ supérieur et l'image interpolée de champ inférieur.

3.  Méthode selon la revendication 2, des valeurs de pixels de la trame de domaine différentielle étant mises à l'échelle par un facteur d'échelle.

4.  Méthode selon la revendication 3, le facteur d'échelle étant déterminé en fonction d'une taille d'affichage.

5.  Méthode selon la revendication 3 ou la revendication 4, le facteur d'échelle étant déterminé en fonction d'une distance d'un observateur d'un affichage depuis l'affichage.

6.  Méthode selon une quelconque des revendications 2 à 5, une mesure étant calculée pour un bloc de pixels de la trame de domaine différentielle, la mesure étant indicative de la quantité de mouvement inter-champs présente dans le bloc.

7.  Méthode selon la revendication 6, la mesure étant calculée en déterminant le nombre de pixels du bloc ayant des voisins horizontaux et verticaux immédiats avec une valeur autre que zéro.

8.  Méthode selon la revendication 7, le bloc étant classé comme étant progressif ou entrelacé en comparant la mesure avec une valeur seuil.

9.  Méthode selon une quelconque des revendications 6 à 8, la taille du bloc étant calculée en fonction de la résolution de la trame vidéo.

10. Méthode selon la revendication 9, la valeur seuil étant calculée en fonction de la taille du bloc.

11. Méthode selon la revendication 2, une mesure étant calculée pour la trame de domaine différentielle, la mesure indiquant la quantité de mouvement inter-champs présente dans la trame de domaine différentielle.

12. Méthode selon la revendication 11, la mesure étant basée sur une valeur de gradient de la valeur des pixels dans la trame de domaine différentielle.

13. Méthode selon la revendication 12, la valeur de gradient étant normalisée avec la déviation absolue moyenne de la valeur des pixels dans la trame de domaine différentielle.

Figure 1

50

40

Figure 2

Grid 70:

| 0 | 52 | 33 | 128 |
|---|----|----|-----|
| 255 | 226 | 6 | 87 |
| 156 | 200 | 59 | 201 |
| 205 | 129 | 23 | 56 |

→ 70

Grid 82:

| 11 | 1 | 11 | 5 |
|----|---|----|---|
| 12 | 45 | 43 | 1 |
| 6 | 12 | 20 | 27 |
| 10 | 15 | 21 | 39 |

→ 82

Grid 60 / 62:

| 54 | 55 | 86 | 103 |
|----|----|----|-----|
| 196 | 0 | 222 | 81 |
| 128 | 139 | 156 | 66 |
| 255 | 204 | 128 | 235 |

→ 60

Grid 80:

| 54 | 3 | 53 | 25 |
|----|---|----|----|
| 59 | 226 | 216 | 6 |
| 28 | 61 | 99 | 135 |
| 50 | 75 | 105 | 179 |

→ 80

Figure 3

11

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1536643 A
- US 20060139491 A